# EUROPEAN PATENT SPECIFICATION

(11) **EP 3 822 162 B1**
(45) Date of publication and mention of the grant of the patent: **29.03.2023**
(21) Application number: 19383003.1
(22) Date of filing: 14.11.2019
(51) Int. Cl.: B64C 9/16, B64C 21/06, B64C 9/14

(54) **AIRCRAFT LIFTING SURFACE**
FLUGZEUGAUFTRIEBSFLÄCHE
SURFACE DE LEVAGE D'AÉRONEF

(43) Date of publication of application: 19.05.2021
(73) Proprietor: Airbus Operations, S.L.U., 28906 Getafe (Madrid) (ES)
(72) Inventor: LLAMAS-SANDIN, Raul Carlos, 28906 Getafe, Madrid (ES)
(74) Representative: ABG Intellectual Property Law, S.L.

(56) References cited:
- US-A- 2 117 607
- US-A- 2 421 694
- US-A- 2 608 365
- US-A- 3 677 504
- US-A- 4 575 030

## Description

### TECHNICAL FIELD OF THE INVENTION

The present invention belongs to the field of lifting surfaces for aircraft. Particularly, the present invention provides an aircraft lifting surface with a slotted leading edge of a control surface for improving the aerodynamic efficiency of said control surface.

### BACKGROUND OF THE INVENTION

There are known lifting surfaces of aircraft with trailing edge control surfaces that include several concepts of slotted control surfaces with applications to high-lift devices, e.g., wing flaps. Particularly, in a slotted flap, a high static pressure air coming from the intrados of a lifting surface flows through the slot and exits from this slot over the extrados of the control surface (flap) with high momentum. This configuration of slotted control surface causes the air to remain attached to the flap surface at high deflection angles and thereby enables that the lifting surface reaches high lift coefficients.

Most of the known slotted control surfaces are only deflected in one direction due to geometric constraints in the actuation mechanism and to the fact that, in the case of high-lift applications, the need for high lift coefficients occurs only in one direction.

Furthermore, there are known control surfaces with a symmetric arrangement of slots that are created by opening/closing door structures by means of actuators or mechanical linkages. Also, there are several control surfaces that are double-hinged for increasing control power on them, however this double-hinged configuration leads to a very complex control surface structural configuration. For example, document US 3,921,942 discloses a control device for an aircraft aerofoil, particularly a rudder element with double slotted vertical stabilizer and a set of doors for varying the slot dimensions in proportion to the amount of rudder deflection. However, this configuration of door structures provides a complex control surface that requires the actuation of said door structures to form the slot for allowing the passage of the airflow through itself.

Additionally, document US 5,549,260 discloses a device for alleviating buffet response on a tail surface with rotatable slotted cylinder that rotates in order to deflect the airflow at the leading edge of the control surface. This rotatable slotted cylinder comprises longitudinal slot openings symmetrically aligned on diametrically opposite side of the cylinder. Given the geometry of said cylinder where there are projections protruding out of the nominal aerofoil shape, a source of drag appears and would be considered rather unacceptable for commercial aircraft since these projections reduce the aerodynamic efficiency.

The known solutions for control surfaces do not reach the theoretical maximum lift force possible when the control surface is deflected. Particularly, the most common designs consist of control surfaces which rotate around an axis so that, when the control surface is deflected, the transition from the fixed portion of the surface and the movable surface is a round surface, generated by the rotation of the leading edge of the control surface. The small radius of curvature of this transitional surface leads to high adverse pressure gradients when the control surface is deflected. The adverse pressure gradient occurs from the round surface to the substantially flat external surface of the movable surface, and this leads to flow separation in conditions of high angle of attack with large control deflections. The flow separation causes a loss of lift and an increment in the drag of the lifting surface.

In the case of tail surfaces of aircraft, the size of the tail is often determined by the lift capability required to provide stability or control the aircraft in certain conditions. The flow separation in the control surface limits the tail capability to generate the required aerodynamic force and this leads to an increase in tail size in order to compensate the limitation in lift coefficient due to flow separation.

A similar physical problem occurs in the leading edge and in the high lift system of wings. In the case of the leading edge a way to delay the flow separation is to guide the air with high pressure around the stagnation point at the lower surface in situations of high angle of attack through a slot. The leading edge element forming the slot is known as slat. This device delays the stall by increasing the momentum and kinetic energy or the air sweeping the upper surface of the aerofoil. This increased momentum in the airstream serves to overcome the adverse pressure gradient that occurs in high angle of attack conditions and therefore the lifting surface maintains its lift generation capability until larger angles of attack. Furthermore, a similar physical effect is exploited in the trailing edge high surfaces using the slotted flap principle. In this case, a gap is formed between the flap and the fixed part of the lifting surface and high pressure air from the lower surface flows at high speed over the upper surface of the movable, helping to maintain the airflow attached and therefore the lift capability with flaps deflected. Thus, in both cases, slats and slotted flaps, the geometry of the gap or slot is inherently asymmetric with respect to the chord of the aerofoil. This is a consequence of the need to generate lift by the wing in a single direction to compensate the aircraft weight.

In addition, control surfaces on tail surfaces, like rudders and elevators, and other control surfaces like wing ailerons, are required to produce lift in both directions. Therefore, the already mentioned devices are not directly applicable to these control surfaces due to the lack of bidirectionality in the lift generation.

The present invention exploits the physical principle of accelerating the airflow over the surface of the movable surface subject to an adverse pressure gradient by utilising the high pressure air on the opposite surface of the lifting surface and channelling this airflow through an appropriately shaped slot. Therefore, the present invention provides an improved control surface for a lifting surface that improves the aerodynamic efficiency of the lifting surface by enabling the attainment of higher lift forces when the control surface deflects. Particularly, in the present invention the ensuing lift augmentation with the control surface deflected is effective in both directions.

Document US 3 677 504 A discloses a control flap arrangement for an airfoil of an aircraft has a control flap with a nose surface defined by a center of curvature.

Then, document US 4 575 030 A relates to airfoils, and more particularly to a laminar flow control swept wing for use on jet transports.

Also, document US 2 608 365 A discloses aircraft control surfaces, and particularly those which affect the direction and attitude of flight.

Moreover, document US 2 421 694 A relates in general to improvements in aircraft and more particularly to improvements in the arrangement, form and method of operation of airfoils and control surfaces of airplanes whereby speeds and efficiencies of flight may be increased.

Finally, document US 2 117 607 A discloses lift increasing devices for airplanes, and has particular reference to a wing construction arranged to provide for an increased lift when the airplane is operating at relatively slow speeds such as in taking off, climbing and landing.

### SUMMARY OF THE INVENTION

The present invention provides a solution for the aforementioned problems, by an aircraft lifting surface according to claim 1 and an aircraft according to claim 12. In dependent claims, preferred embodiments of the invention are defined.

In a first aspect, the present invention provides an aircraft lifting surface comprising a support structure and a control surface, the control surface comprising:
- a leading edge structure, and
- at least one aerodynamic element at least partially arranged around the leading edge structure and separated from the leading edge structure by a slot, the slot comprising an inlet and an outlet,
wherein
the control surface is configured to rotate around a hinge axis forming a deflection angle with respect to the support structure, the slot is an open channel between the aerodynamic element and the leading edge structure,
when the control surface is at a predetermined deflection angle the inlet of the slot is faced to an airflow flowing around the lifting surface so that this airflow is captured through the inlet and directed to the outlet of the slot, further comprising sealing means configured to block the passage of airflow through the lifting surface, between the support structure and the control surface, when the control surface is at least at the predetermined deflection angle, so that the sealing means prevent the airflow to pass to the other side of the control surface crossing the inside of the lifting surface, and the sealing means comprise a lip shaped seal protruding from inside of the support structure towards the control surface, so that when the inlet of the slot is not faced to the airflow flowing around the lifting surface at least a lip of the lip shaped seal is in contact with the at least one aerodynamic element.

The present control surface is a structural component of the lifting surface configured for generating aerodynamic forces to an aircraft. Particularly, the control surface is formed by a leading edge structure and a trailing edge structure. The leading edge structure is the structure that is closer to the support structure on the lifting surface than the trailing edge.

Through the entire document it will be understood that the control surface has a control surface chord line *C_{C}* extended from the leading edge structure to the trailing edge structure. More specifically, this chord line *C_{C}* of the control surface is extended from the furthest end of the leading edge structure with respect to the trailing edge to the furthest end of the trailing edge with respect to its leading edge structure. The furthest end of the leading edge structure corresponding to the front end of the control surface and the furthest end of the trailing edge corresponding to the rear end of the control surface.

The present lifting surface further comprises a support structure that is understood as a structural component with respect to which the control surface will rotate for deflecting airflow. That is, the support structure will be understood as a torsion box, or a leading edge structure, or a hinge axis.

The control surface further comprises at least one aerodynamic element that is understood as a structural body with an airfoil-like shape. This aerodynamic element is located at least partially around the leading edge structure of the control surface and separated from the leading edge structure by a slot. This slot is an open channel between the aerodynamic element solidary with the control surface and the control surface leading edge structure.

The slot of the control surface comprises an inlet and an outlet for allowing the passage of airflow through them. The inlet is an opening in the slot through which an airflow flowing outside the lifting surface with high dynamic pressure penetrates into the slot for flowing along the slot extension until leaves the slot outside the lifting surface through of the mentioned outlet.

The lifting surface further comprises a hinge axis around which the control surface rotates for generating aerodynamic forces to an aircraft, particularly, for deflecting airflow by means of the rotation of the control surface to either side of the lifting surface. In this sense, when the control surface rotates around this hinge axis, a deflection angle is formed between the control surface and the support structure.

The rotation of the control surface will be understood as the rotational movement of the control surface in one or two rotational directions (positive and negative rotational directions) with respect to the support structure, being one of the two rotational directions opposite to the other.

Furthermore, the aerodynamic element is located in undeflected conditions forward of the hinge line, thus, the rotation of the control surface around the hinge axis separates this aerodynamic element from the support structure and advantageously, allows capturing air with high dynamic pressure.

There is a predetermined deflection angle for which the control surface deflects airflow through the slot. As the control surface rotates with respect to the support structure, deflection angles are formed among the rotated control surface and the support structure. Particularly, at a predetermined deflection angle, the inlet of the slot is exposed to the airflow that is flowing outside the lifting surface. This airflow comes into the slot through the inlet and flows along the slot until it leaves through the outlet. Thus, as the control surface rotates with respect to the support structure the slot inlet comes into contact with an airflow flowing around the lifting surface and thus an airflow deflection is generated.

When the airflow is flowing through the slot it will be understood that this airflow is inside the lifting surface. When the airflow is flowing around the lifting surface, either before entering through the inlet or the airflow leaving through the outlet, it will be understood that the airflow is outside the lifting surface.

Advantageously, the present control surface allows deflecting airflow by means of capturing high dynamic pressure air and accelerating it through the slot so that it leaves the slot of the control surface with a greater velocity than at the inlet of the mentioned slot where this airflow is captured.

Therefore, the present slotted control surface advantageously allows to attain a higher lift coefficient compared with the prior art solutions. In addition, this control surface configuration also allows a larger control power at large defections of this control surface given the present lifting surface configuration.

Particularly, the slot formed between the aerodynamic element and the leading edge structure of the control surface captures high dynamic pressure air when the control surface rotates and thus energises the boundary layer over the control surface. Advantageously, when the control surface rotates with respect to the support structure the flow separation in the adverse pressure gradients produced is delayed compared with the prior art solution.

The effect of the airflow acceleration is that by gaining kinetic energy, extracted from the static pressure at the slot inlet, the airflow exits the slot by the slot outlet with higher momentum compared to that of the boundary layer. This enables the airflow to remain attached to the surfaces of the control surface and overcome the adverse pressure gradient that arises when the control surface deflects.

In a particular embodiment, the hinge axis goes through the leading edge structure of the control surface so that the control surface rotates around this hinge axis on its leading edge structure.

In a particular embodiment, the leading edge structure of the control surface is substantially round. The expression "substantially round" will be understood as that the leading edge structure has a curved surface defined by one or more radius of curvature. More in particular, a portion of the leading edge structure has a circular surface and the rest portion of the leading edge structure comprises a surface formed by adaptation curves.

In a particular embodiment, the aerodynamic element exhibits the shape of an airfoil and comprises in its external surface (the surface that is partially faced towards outside the lifting surface) a first portion that is substantially round and a second portion that is substantially planar. Advantageously, this design of the aerodynamic element provides an aerodynamic shape that reduces the drag in the lifting surface when it is deflected together with the rotation of the control surface, as well as when the control surface is not rotated.

When the control surface is not rotated (or when the inlet of the slot is not facing the airflow flowing around the lifting surface), the surfaces of the support structure and the surfaces of the control surface together with the aerodynamic elements define surfaces that are essentially the same as the nominal shape of the airfoil of the lifting surface.

In a particular embodiment, the control surface further comprises an extrados and an intrados, wherein the at least one aerodynamic element is positioned on the extrados and/or on the intrados of the control surface.

These extrados and intrados are understood as the upper surface and the lower surface of the control surface with respect to its chord line *C_{C}*. Particularly, the aerodynamic element may be partially arranged around the leading edge structure at the extrados or at the intrados or at both sides, extrados and intrados.

The arrangement of the aerodynamic element located only on one side of the control surface advantageously reduces the complexity of the assembly and is applicable when the lift capability required by the lifting surface is significantly higher in one rotational direction than on the other. This configuration is for the case in the elevator surfaces of horizontal stabilizers which tend not to have symmetric aerofoils.

In a more particular embodiment, the control surface comprises two aerodynamic elements,
- a first aerodynamic element at least partially arranged around the leading edge structure and on the extrados of the control surface, and
- a second aerodynamic element at least partially arranged around the leading edge structure and on the intrados of the control surface.

The arrangement of two aerodynamic elements on the control surface advantageously allows the control surface to deflect the airflow in both positive and negative deflection angles (towards both the intrados and the extrados of the control surface). That is, the control surface can deflect airflow towards the extrados by its rotation in a first rotational direction and also can deflect airflow towards the intrados by its rotation in a second rotational direction, the second rotational direction being opposite to the first rotational direction.

The sealing means prevent the airflow going through the lifting surface from the intrados of the control surface to the extrados and/or vice versa when the control surface is at the predetermined deflection angle. Advantageously, these sealing means avoid leakage or loss of pressure from one side of the lifting surface to the other.

In a more particular embodiment, the sealing means are located on the support structure so that at any deflection angle of the control surface the sealing means are in contact with the leading edge structure of the control surface.

The contact between the sealing means and the leading edge structure of the control surface advantageously prevents the airflow from passing between them and consequently going through the lifting surface from one side to the other side.

Through this entire document the fact that the slot is not faced to the airflow will be understood as that the control surface is at the position where the airflow flowing around the lifting surface cannot penetrate through the slot inlet. In addition, this position will be also understood as the position where the control surface is not rotated with respect to the support structure.

The sealing means protrude from inside of the support structure towards the control surface in the form of lips. When the inlet of the control surface slot is not faced to the airflow flowing around the lifting surface, at least one lip of the sealing means is in contact with one aerodynamic element.

Given that the slot outlet is always in contact or exposed to the airflow flowing around the lifting surface, the contact between the lip shaped seal and the aerodynamic element prevents an airflow coming from the slot outlet to penetrate the lifting surface from one side of the lifting surface to the other.

In a more particular embodiment, when the inlet of the control surface slot is not in contact with the airflow flowing around the lifting surface, both lips of the sealing means are in contact with two aerodynamic elements.

In a particular embodiment, the support structure comprises an upper skin and lower skin, both upper and lower skins at least partially house at least one aerodynamic element of the control surface when the inlet of the slot is not faced to the airflow flowing around the lifting surface.

These upper and lower skins define a support structure that allows partially housing the control surface. Particularly, the furthest end of the leading edge structure of the control surface with respect to the trailing edge of this control surface is arranged forward of the rear end of one of the lower and upper skin.

This configuration of the upper and/lower surfaces of the support structure and the aerodynamic element in contact when the control surface is not deflected, provides a continuous lifting surface that advantageously reduces the drag of the present lifting surface.

Furthermore, for the particular embodiment wherein the control surface comprises two aerodynamic elements, both upper and lower skins of the support structure partially house an aerodynamic element at any deflection angle of the control surface.

In a more particular embodiment, the sealing means are a seal protruding from one of the lower skin and the upper skin of the support structure. Particularly, the seal is in contact with the leading edge structure of the control surface at any deflection angle of the control surface.

In a particular embodiment, the control surface is rotatably attached to the support structure at the hinge axis by means of a first fitting. The first fitting is understood as an attachment element that keeps the control surface rotatable attached to the support structure, allowing its rotation around the hinge axis with respect to said support structure.

More particularly, the control surface is further attached to the hinge axis by means of a second fitting. The second fitting is also an attachment element that attaches the control surface to the hinge axis allowing the control surface rotation with respect to the support structure.

In a particular embodiment, the control surface is a trailing edge control surface.

In a particular embodiment, the aircraft lifting surface is an aircraft wing, or a horizontal stabilizer, or a vertical stabilizer.

In a particular embodiment, the control surface is a rudder or an elevator or a wing aileron or a wing flap.

In a particular embodiment, the control surface is symmetric with respect to its chord line *C_{C}*. Given the symmetric configuration of the control surface and the suitable aerodynamic shape of the aerodynamic elements, this control surface can rotate in two rotational directions, and the aerodynamic elements are effective in producing an acceleration of the airflow through the slot in both positive and negative deflection angles.

In another particular embodiment, the control surface is asymmetric with respect to its chord length *C_{C}*. Advantageously, this asymmetric configuration reduces the complexity of the lifting surface assembly, and also increases the lift capability in one rotational direction compared to the other rotational direction. In particular, this configuration of asymmetric arrangement is applied for an aircraft flap and for a horizontal tail surface on take-off.

In a second aspect, the present invention provides an aircraft comprising an aircraft lifting surface according to any embodiment of the first aspect.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows a cross sectional view of a lifting surface according to a first embodiment of the present invention.
- Figure 2: This figure shows a cross sectional view of the lifting surface according to the first embodiment with the control surface rotated.
- Figure 3: This figure shows a cross sectional view of a lifting surface according to an illustrative example not falling under the scope of the claims.
- Figure 4: This figure shows a cross sectional view of the lifting surface according to the illustrative example not falling under the scope of the claims with the control surface rotated.

- Figure 5: This figure shows an aircraft according to an embodiment of the present invention.

### DETAILED DESCRIPTION OF THE INVENTION

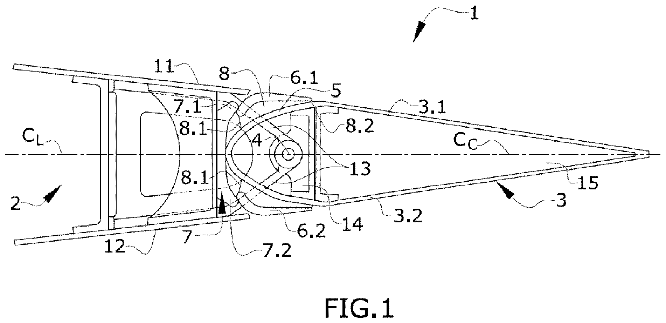

Figures 1-2 show embodiments of an aircraft lifting surface (1) according to the present invention. The aircraft lifting surface (1) mainly comprises a support structure (2) and a control surface (3). This control surface (3) comprises a leading edge structure (5) and a trailing edge (15), the leading edge structure (5) being closer to the support structure (2) than the trailing edge (15).

In addition, the control surface (3) comprises at least one aerodynamic element (6, 6.1, 6.2) that is at least partially arranged around the leading edge structure (5) and separated from the leading edge structure (5) by a slot (8). This slot (8) comprises an inlet (8.1) and an outlet (8.2) for allowing the passage of airflow through them. This at least one aerodynamic element (6, 6.1, 6.2) is located on the extrados (3.1) or on the intrados (3.2) of the control surface (3).

This aircraft lifting surface (1) further comprises a hinge axis (4) around which the control surface (3) can rotate to form a deflection angle (Θ) with respect to the support structure (2). That is, the control surface (3) is rotatable attached to the hinge axis (4). In these embodiments, the hinge axis (4) goes through the leading edge structure (5) of the control surface (3).

When the control surface (3) rotates to a predetermined deflection angle (Θ), the inlet (8.1) of the slot (8) is in contact with the airflow (9) flowing around the lifting surface (1). That is, when the control surface (3) is at the predetermined deflection angle (Θ), the airflow (9) gets into the slot (8) through the inlet (8.1) and flows towards the outlet (8.2) of the slot (8) thus the airflow (9) leaves the slot (8) with greater velocity than that of the boundary layer of a control surface not embodying this invention.

The present aircraft lifting surface (1) comprises a chord line *C_{L}* that is extended from one end (not shown) to another end corresponding to the control surface end located on its trailing edge (15). In addition, the control surface (3) comprises a chord line *C_{C}* that is extended from the furthest end of the leading edge structure (5) with respect to the trailing edge (15) to the furthest end of the trailing edge (15) with respect to its leading edge structure (5).

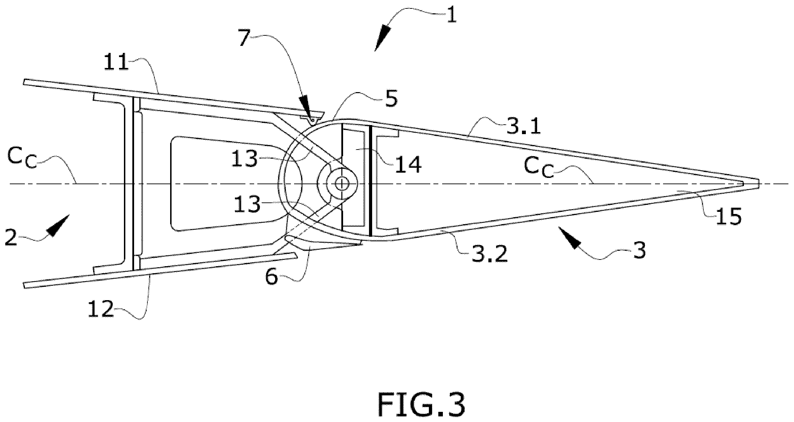

On these figures 1-4, the control surface (3) is shown in two different positions, a first position and a second position. The first position corresponds to the position wherein the control surface (3) is not rotated with respect to the support structure (2), that is, when the inlet (8.1) of the slot (8) is not in contact with the airflow (9) flowing outside the lifting surface (1). At this first position (shown on figures 1 and 3), the control surface chord line *C_{C}* is aligned to the lifting surface chord line *C_{L}* so that it is understood that the control surface (3) forms a deflection angle (θ) of 0° with respect to the support structure (2).

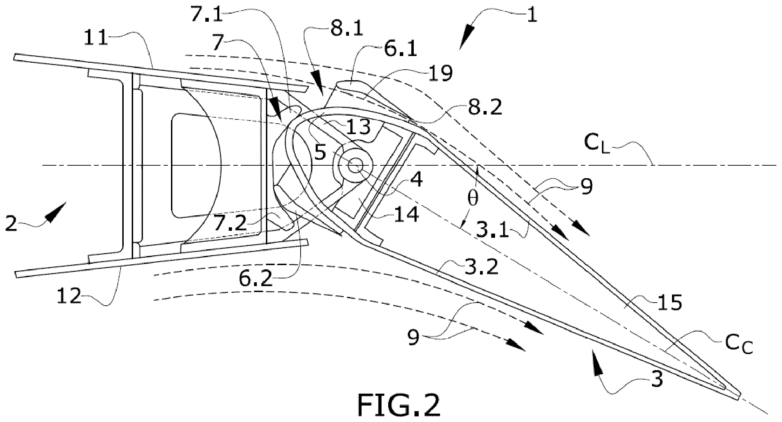

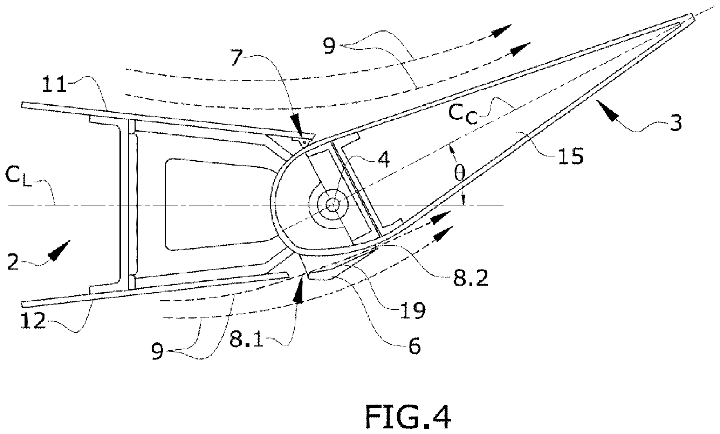

The second position corresponds to the position wherein the control surface (3) is rotated at a predetermined deflection angle (Θ) with respect to the support structure (2), that is, when the inlet (8.1) is faced or in direct contact to the airflow (9) flowing around the lifting surface (1). At this second position (shown on figures 2 and 4), the control surface chord line *C_{C}* forms an angle with respect to the lifting surface chord line *C_{L}*, this angle corresponding to the predetermined deflection angle (Θ), the angle θ being different from 0.

Therefore, it will be understood that at the first position the control surface (3) is not rotated (3) with respect to the support structure (2) and that at the second position the control surface (3) is rotated with respect to the support structure (2) forming a predetermined deflection angle (Θ).

The support structure (2) is a torsion box that comprises upper skin (11) and lower skin (12). These upper (11) and lower (12) skins at least partially house a portion of the leading edge structure (5) of the control surface (3).

Furthermore, the control surface (3) is rotatable attached to the support structure (2) at the hinge axis (4) by the first fitting (13). Additionally, this control surface (3) is also attached to the hinge axis (4) by a second fitting (14).

### First embodiment

Figures 1-2 show a first embodiment of a lifting surface (1) according to the description above, particularly showing a cross sectional view of this lifting surface (1). In this first embodiment, the control surface (3) comprises two aerodynamic elements (6.1, 6.2). A first aerodynamic element (6.1) that is at least partially arranged around the leading edge structure (5) on the extrados (3.1) of this control surface (3), and a second aerodynamic element (6.2) that is at least partially arranged around the leading edge structure (5) on the intrados (3.2) of the control surface (3). That is, the aerodynamic elements (6.1, 6.2) are positioned one on each side of the control surface (3) respect to its chord line *C_{C}*.

In this first embodiment, the leading edge structure (5) of the control surface (3) is substantially round and the control surface (3) is symmetric with respect to its chord line *C_{C}*.

The control surface (3) can rotate around the hinge axis (4) forming a deflection angle (Θ) (shown in figure 2) with respect to the support structure (2). More particularly, the control surface (3) can rotate in two opposite rotational directions.

In particular, each aerodynamic element (6.1, 6.2) is located around a section of the leading edge structure (5) respectively. Both aerodynamic elements (6.1, 6.2) are symmetric with respect to the chord line of the control surface *C_{C}*. These aerodynamic elements (6.1, 6.2) also rotate around the hinge axis (4) at the same time as the control surface (3).

At any deflection angle (Θ), the aerodynamic elements (6.1. 6.2), being separated from the leading edge structure (5), will form a slot (8) as an airflow passage. Particularly, this slot (8) comprises an inlet (8.1) and an outlet (8.2) for allowing the passage of airflow (9) through the slot (8) entering through the inlet (8.1), circulating through the slot (8) and exiting through the outlet (8.2) as it shown on figure 2. This particular configuration of slotted control surface (3) allows attaining a higher lift coefficient, as well as a larger control power at large deflections, compared with the prior art configurations. Particularly, this slot (8) captures high dynamic pressure air when the control surface (3) is rotated (figure 2), in such a way that the boundary layer is energised over the control surface (3).

In this first embodiment, the control surface (3) can deflect airflow in two directions according to the rotational direction of this control surface (3) with respect to the support structure (2). For example, on figure 2, the control surface (3) is rotated towards its intrados (3.2), that is, the control surface (3) is deflecting airflow (9) in the direction of the intrados (3.2). However, the control surface (3) is configured, thanks to the presence of two aerodynamic elements (6.1, 6.2), to also deflect airflow in the direction of its extrados (3.1) (not shown).

In figure 1, the control surface (3) is on a first position where the deflection angle (Θ) is 0, that is, where the control surface (3) is not rotated with respect to the support structure (2). In this first position, the arrangement of the aerodynamic elements (6.1, 6.2) and the support structure (2) forms a housing for the leading edge structure (5) of the control surface (3). In particular, the upper (11) and lower (12) skins of the support structure (2) are cantilevered and closer to each aerodynamic element (6.1, 6.2) as it can be observed in figure 1.

Each aerodynamic element (6.1, 6.2) has an aerodynamic shape that provides, together with the skins (11, 12) of the support structure (2) and the surfaces of the trailing edge (15) of the control surface (3), a substantially continuous surface for the lifting surface (1). This shape of the aerodynamic elements (6.1, 6.2) reduces the drag in the lifting surface (1) when the control surface is rotated.

In figure 2, the control surface (3) is on a second position where a predetermined deflection angle (Θ) is formed by the control surface (3) with respect to the support structure (2). That is, in this second position the control surface (3) is rotated with respect to the support structure (2). Particularly, a gap is formed between the first aerodynamic element (6.1) and the upper skin (11) of the support structure (2). This gap allows the inlet (8.1) of the slot (8) being faced and in direct contact with the airflow (9) flowing around the lifting surface (1).

When the control surface (3) is rotated around the hinge axis (4) and one of the aerodynamic elements (6) is separated from the support structure (2) the passage of airflow though the slot (8) is deflected. In this configuration, the airflow (9) from the slot (8) located on the intrados (3.2) of the control surface is blocked by a seal (7).

In this first embodiment the lifting surface (1) further comprises a seal (7) arranged on the support structure (2) to be always in contact with the leading edge structure (5) of the control surface (3). That is, in both positions of the control surfaces (figures 1-2) the seal (7) is in contact with the leading edge structure (5) of the control surface (3). This seal (7) has a lip shape that protrudes from the inside of the support structure (2) towards the control surface (3). In particular, when the control surface is in the first position (figure 1), both lips (7.1, 7.2) of the seal (7) are in contact with the aerodynamic elements (6.1, 6.2). At this position, the seal (7) prevents that the airflow (9) may go into the slot (8) through one of the outlets (8.2) and may pass to the other side of the control surface (3) crossing through the lifting surface. On the other hand, when the control surface (3) is in the second position (figure 2), one lip (7.1) of the seal (7) contacts with the leading edge structure (5) preventing the airflow (9) flowing through the slot (8) to pass to the other side of the control surface (3) crossing the inside of the lifting surface (1). Further, in this second position, the other lip (7.2) of the seal (7) contacts with the second aerodynamic elements (6.2) limiting the airflow flowing towards inside the control surface (3).

As the control surface (3) begins to rotate, the first aerodynamic element (6.1) ceases to be in contact with the first seal (7) and the airflow (9) begins to flow through the slot (8) while the second aerodynamic element (6.2) remains in contact with the seal (7) (the mobile transition of the control surface (3) from figure 1 to figure 2). Therefore, this seal (7) avoids leakage or loss of pressure from one side of the lifting surface (1) to the other.

Figure 2 particularly shows the airflow path around the lifting surface (1) when the control surface (3) is at a predetermined deflection angle (Θ). When the control surface (3) rotates in a given direction with a predetermined deflection angle (Θ), the first aerodynamic element (6.1) ceases to be in contact with the first seal (7) and also rotates with the control surface (3). As a result of this rotation, the inlet (8.1) of the slot (8) begins in contact with the airflow (9) for allowing the airflow deflection by means of the control surface (3) rotation.

In this way, a part of the airflow (9) circulating around the lifting surface (1) enters the slot (8) through the inlet (8.1) and circulates through the slot (8) until it exists through the outlet (8.2) and continues circulating on the surface of the extrados (3.1) of the control surface (3).

On the other hand, the rest of the airflow (9) circulating around the lifting surface (1) continues flowing around the first aerodynamic element (6.1). Particularly, there is an airflow that circulates around the top of the lifting surface (1) and another that circulates around the bottom of this lifting surface (1).

In a particular example, the lifting surface (1), shown for this first embodiment, is a vertical stabilizer wherein the support structure (2) is a torsion box and the control surface (3) is a rudder.

Figures 3-4 show an illustrative example of a lifting surface not falling under the scope of the claims, particularly a cross sectional view of this lifting surface (1). In this example, the control surface (3) comprises one aerodynamic element (6) that is at least partially arranged around the leading edge structure (5) on the intrados (3.2) of the control surface (3). In this configuration, on the intrados (3.1) the control surface (3) is free of an additional aerodynamic element.

In this example, the control surface (3) is asymmetric with respect to its chord line *C_{C}*.

Moreover, the control surface (3) can rotate around the hinge axis (4) forming a deflection angle (Θ) (shown in figure 4) with respect to the support structure (2). This control surface can rotate in both rotational directions, but the enhanced control force only occurs in one rotational direction. This is useful for take-off, but in flight both directions are used, although at lower deflection angles. The aerodynamic element (6) also can rotate round the hinge axis (4) at the same time as the control surface (3).

At a predetermined deflection angle (Θ), the aerodynamic element (6), being separated from the leading edge structure (5), will form a slot (8) as an airflow passage. This slot (8) comprises an inlet (8.1) and an outlet (8.2) for allowing the passage of airflow (9) through the slot (8) entering through the inlet (8.1), circulating through the slot (8) and exiting through the outlet (8.2) as it shown on figure 4. This particular configuration of slotted control surface (3) allows to attain a higher lift coefficient, as well as a larger control power at large deflections, compared with the prior art configurations. Particularly, this slot (8) captures high dynamic pressure air when the control surface (3) is rotated (figure 4), in such a way that it is energises the boundary layer over the control surface (3).

In figure 3, the control surface (3) is on a first position where the deflection angle (Θ) is 0, that is, where the control surface (3) is not rotated with respect to the support structure (2). In this first position, the arrangement of the aerodynamic element (6) and the support structure (2) forms a housing for the leading edge structure (5) of the control surface (3). In particular, the upper (11) and lower (12) skins of the support structure (2) are cantilevered and the lower skin (12) is closer to the aerodynamic element (6) as it can be observed in figure 3.

The aerodynamic element (6) has an aerodynamic shape that provides, together with the lower skin (12) of the support structure (2) and the surface of the trailing edge (15) of the control surface (3), a substantially continuous surface for the lifting surface (1). This shape of the aerodynamic element (6) reduces the drag in the lifting surface (1) when the control surface is rotated.

In figure 4, the control surface (3) is on a second position where a predetermined deflection angle (Θ) is formed by the control surface (3) with respect to the support structure (2). That is, in this second position the control surface (3) is rotated with respect to the support structure (2). Particularly, a gap is formed between the aerodynamic element (6) and the lower skin (13) of the support structure (2). This gap allows the inlet (8.1) of the slot (8) being faced and in direct contact with the airflow (9) flowing around the lifting surface (1) on the intrados (3.2) of the control surface (3).

When the control surface (3) is rotated around the hinge axis (4) and the aerodynamic element (6) is separated from the support structure (2) the passage of airflow though the slot (8) is deflected. In this configuration, the passage of airflow (9) towards inside the lifting surface (1) on the extrados (3.1) of the control surface (3) is blocked by a seal (7).

In this example, the lifting surface (1) further comprises a seal (7) located inside the support structure (2) and attached to the inner side of the upper surface (11) of the support structure (2). Particularly, the seal (7) is always in contact with the leading edge structure (5) of the control surface (3). That is, in both positions of the control surfaces (figures 3-4) the seal (7) is in contact with the leading edge structure (5) of the control surface (3). This seal (7) protrudes towards the inside of the upper skin (11) of the support structure (2). At any position of the control surface (3), the seal (7) prevents that the airflow (9) may cross the lifting surface (1) between the support structure (2) and the control surface (3) and may passage to the other side on the control surface (3). Therefore, this seal (7) avoids leakage or loss of pressure from one side of the lifting surface (1) to the other, that is, from the extrados (3.1) to the intrados (3.2).

Figure 4 particularly shows the airflow path around the lifting surface (1) when the control surface (3) is at a predetermined deflection angle (Θ). When the control surface (3) rotates in a given direction with a predetermined deflection angle (Θ), a portion of the aerodynamic element (6.1) ceases to be partially housed in the support structure (2) and also rotates with the control surface (3). As a result of this rotation, the inlet (8.1) of the slot (8) begins in contact with the airflow (9) for allowing the airflow deflection by means of the control surface (3) rotation.

In this way, a part of the airflow (9) circulating around the lifting surface (1) enters the slot (8) through the inlet (8.1) and circulates through said slot (8) until it exists through the outlet (8.2) and continues circulating on the surface of the intrados (3.2) of the control surface (3).

Furthermore, there is an airflow (9) that circulates around the top of the lifting surface (1) which cannot penetrate to inside of the lifting surface due to the presence of the seal (7) and its contact with the leading edge structure (5).

In a particular example, the lifting surface (1) is a horizontal lifting surface wherein the support structure (2) is a torsion box and the control surface (3) is an elevator.

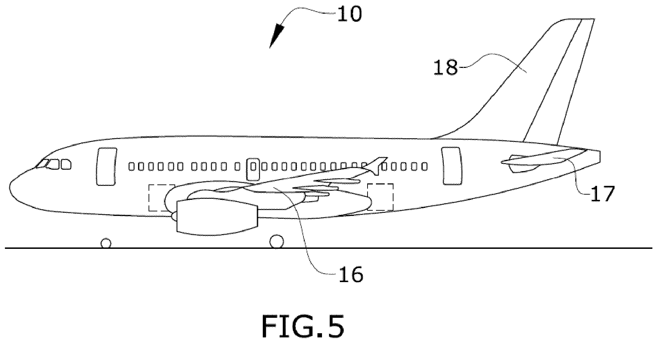

Figure 5 shows an aircraft (10) comprising a plurality of lifting surfaces according to the present invention. Particularly, these lifting surfaces are the aircraft wings (16), horizontal stabilizers (17), and vertical stabilizer (18). In a particular example, the horizontal stabilizer (17) corresponds to the already mentioned illustrative example of the present lifting surface. The vertical stabilizer (18) corresponds to the first embodiment of the present lifting surface. On a wing, the present invention could be applied to ailerons and potentially flap surfaces. On a horizontal tail plane, the elevator could benefit from the first embodiment of the present invention. On a vertical tail plane, the rudder would benefit from the first embodiment of the present invention.

## Claims

1. Aircraft lifting surface (1) comprising a support structure (2) and a control surface (3), the control surface (3) comprising:
- a leading edge structure (5), and
- at least one aerodynamic element (6, 6.1, 6.2) at least partially arranged around the leading edge structure (5) and separated from the said leading edge structure (5) by a slot (8), the slot (8) comprising an inlet (8.1) and an outlet (8.2),
wherein
the control surface (3) is configured to rotate around a hinge axis (4) forming a deflection angle (Θ) with respect to the support structure (2),
the slot (8) is an open channel between the aerodynamic element (6, 6.1, 6.2) and the leading edge structure (5),
when the control surface (3) is at a predetermined deflection angle (Θ) the inlet (8.1) of the slot (8) is faced to an airflow (9) flowing around the lifting surface (1) so that this airflow (9) is captured through the inlet (8.1) and directed to the outlet (8.2) of the slot (8),
further comprising sealing means (7) configured to block the passage of airflow through the lifting surface (1), between the support structure (2) and the control surface (3), when the control surface (3) is at least at the predetermined deflection angle (Θ), so that the sealing means (7) prevent the airflow (9) to pass to the other side of the control surface (3) crossing the inside of the lifting surface (1), **characterized in that**
the sealing means (7) comprise a lip shaped seal (7) protruding from inside of the support structure (2) towards the control surface (3), so that when the inlet (8.1) of the slot (8) is not faced to the airflow (9) flowing around the lifting surface (1) at least a lip (7.1, 7.2) of the lip shaped seal (7) is in contact with the at least one aerodynamic element (6, 6.1, 6.2).

2. Aircraft lifting surface (1) according to claim 1, wherein the control surface (3) further comprises:
- an extrados (3.1), and
- an intrados (3.2),
wherein the at least one aerodynamic element (6, 6.1, 6.2) is positioned on the extrados (3.1) and/or on the intrados (3.2) of the control surface (3).

3. Aircraft lifting surface (1) according to claim 2, wherein the control surface (3) comprises two aerodynamic elements (6.1, 6.2),
- a first aerodynamic element (6.1) at least partially arranged around the leading edge structure (5) and on the extrados (3.1) of the control surface (3), and
a second aerodynamic element (6.2) at least partially arranged around the leading edge structure (5) and on the intrados (3.2) of the control surface (3).

4. Aircraft lifting surface (1) according to claim 1, wherein the sealing means (7) are located on the support structure (2) so that at any deflection angle (Θ) of the control surface (3) the sealing means (7) are in contact with the leading edge structure (5) of the control surface (3).

5. Aircraft lifting surface (1) according to any of previous claims, wherein the support structure (2) comprises an upper skin (11) and lower skin (12), both upper (11) and lower (12) skins at least partially house at least one aerodynamic element (6, 6.1, 6.2) of the control surface (3) when the inlet (8.1) of the slot (8) is not faced to the airflow (9) flowing around the lifting surface (1).

6. Aircraft lifting surface (1) according to any of the previous claims, wherein the sealing means (7) are a seal protruding from one of the lower skin (12) and the upper skin (11) of the support structure (2).

7. Aircraft lifting surface (1) according to any of previous claims, wherein the control surface (3) is rotatable attached to the support structure (2) at the hinge axis (4) by means of a first fitting (13).

8. Aircraft lifting surface (1) according to claim 7, wherein the control surface (3) is further attached to the hinge axis (4) by means of a second fitting (14).

9. Aircraft lifting surface (1) according to any of previous claims, wherein the control surface (3) is a trailing edge control surface.

10. Aircraft lifting surface (1) according to any of previous claims being:
- an aircraft wing (16), or
- a horizontal stabilizer (17), or
- a vertical stabilizer (18).

11. Aircraft lifting surface (1) according to claims 1-9, wherein the control surface (3) is a rudder, or an elevator, or a wing aileron or a wing flap.

12. Aircraft (10) comprising an aircraft lifting surface (1) according to any of previous claims.

## Patentansprüche

1. Flugzeugauftriebsfläche (1), umfassend eine Stützstruktur (2) und eine Steuerfläche (3), wobei die Steuerfläche (3) Folgendes umfasst:
- eine Vorderkantenstruktur (5) und
- mindestens ein aerodynamisches Element (6, 6.1, 6.2), das zumindest teilweise um die Vorderkantenstruktur (5) angeordnet und durch einen Schlitz (8) von der Vorderkantenstruktur (5) getrennt ist, wobei der Schlitz (8) einen Einlass (8.1) und einen Auslass (8.2) umfasst,
wobei
die Steuerfläche (3) dazu ausgelegt ist, sich um eine Scharnierachse (4) zu drehen und einen Ablenkwinkel (θ) in Bezug zur Stützstruktur (2) ausbildet,
der Schlitz (8) ein offener Kanal zwischen dem aerodynamischen Element (6, 6.1, 6.2) und der Vorderkantenstruktur (5) ist,
wenn sich die Steuerfläche (3) in einem festgelegten Ablenkwinkel (θ) befindet, der Einlass (8.1) des Schlitzes (8) einem Luftstrom (9) zugewandt ist, der um die Auftriebsfläche (1) strömt, sodass dieser Luftstrom (9) durch den Auslass (8.1) aufgenommen und zum Auslass (8.2) des Schlitzes (8) geleitet wird,
ferner umfassend eine Dichtungseinrichtung (7), die dazu ausgelegt ist, den Luftstrom durch die Auftriebsfläche (1) zu blockieren, zwischen der Stützstruktur (2) und der Steuerfläche (3), wenn sich die Steuerfläche (3) zumindest in dem festgelegten Ablenkwinkel (Θ) befindet, sodass die Dichtungseinrichtung (7) verhindert, dass der Luftstrom (9) zur anderen Seite der Steuerfläche (3) gelangt und das Innere der Auftriebsfläche (1) durchquert, **dadurch gekennzeichnet, dass**
die Dichtungseinrichtung (7) eine lippenförmige Dichtung (7) umfasst, die von innerhalb der Stützstruktur (2) zur Steuerfläche (3) hin vorsteht, sodass, wenn der Einlass (8.1) des Schlitzes (8) dem um die Auftriebsfläche (1) strömenden Luftstrom (9) nicht zugewandt ist, zumindest eine Lippe (7.1, 7.2) der lippenförmigen Dichtung (7) das mindestens eine aerodynamische Element (6, 6.1, 6.2) berührt.

2. Flugzeugauftriebsfläche (1) nach Anspruch 1, wobei die Steuerfläche (3) ferner Folgendes umfasst:
- einen Bogenrücken (3.1) und
- eine Bogenlaibung (3.2),
wobei das mindestens eine aerodynamische Element (6, 6.1, 6.2) auf dem Bogenrücken (3.1) und/oder auf der Bogenlaibung (3.2) der Steuerfläche (3) positioniert ist.

3. Flugzeugauftriebsfläche (1) nach Anspruch 2, wobei die Steuerfläche (3) zwei aerodynamische Elemente (6.1, 6.2) umfasst,
- ein erstes aerodynamisches Element (6.1), das zumindest teilweise um die Vorderkantenstruktur (5) und auf dem Bogenrücken (3.1) der Steuerfläche (3) angeordnet ist, und
- ein zweites aerodynamisches Element (6.2), das zumindest teilweise um die Vorderkantenstruktur (5) und auf der Bogenlaibung (3.2) der Steuerfläche (3) angeordnet ist.

4. Flugzeugauftriebsfläche (1) nach Anspruch 1, wobei die Dichtungseinrichtung (7) auf der Stützstruktur (2) angeordnet ist, sodass in einem beliebigen Ablenkwinkel (θ) der Steuerfläche (3) die Dichtungseinrichtung (7) die Vorderkantenstruktur (5) der Steuerfläche (3) berührt.

5. Flugzeugauftriebsfläche (1) nach einem der vorstehenden Ansprüche, wobei die Stützstruktur (2) eine obere Haut (11) und eine untere Haut (12) umfasst, wobei sowohl die obere (11) als auch die untere (12) Haut zumindest teilweise mindestens ein aerodynamisches Element (6, 6.1, 6.2) der Steuerfläche (3) aufnehmen, wenn der Einlass (8.1) des Schlitzes (8) dem um die Auftriebsfläche (1) strömenden Luftstrom (9) nicht zugewandt ist.

6. Flugzeugauftriebsfläche (1) nach einem der vorstehenden Ansprüche, wobei die Dichtungseinrichtung (7) eine Dichtung ist, die von der unteren Haut (12) oder der oberen Haut (11) der Stützstruktur (2) vorsteht.

7. Flugzeugauftriebsfläche (1) nach einem der vorstehenden Ansprüche, wobei die Steuerfläche (3) mittels eines ersten Fittings (13) drehbar an der Scharnierachse (4) an der Stützstruktur (2) befestigt ist.

8. Flugzeugauftriebsfläche (1) nach Anspruch 7, wobei die Steuerfläche (3) ferner mittels eines zweiten Fittings (14) an der Scharnierachse (4) befestigt ist.

9. Flugzeugauftriebsfläche (1) nach einem der vorstehenden Ansprüche, wobei die Steuerfläche (3) eine Hinterkantensteuerfläche ist.

10. Flugzeugauftriebsfläche (1) nach einem der vorstehenden Ansprüche, die Folgendes ist:
- eine Flugzeugtragfläche (16) oder
- eine Höhenflosse (17) oder
- eine Seitenflosse (18).

11. Flugzeugauftriebsfläche (1) nach Anspruch 1-9, wobei die Steuerfläche (3) ein Seitenruder oder ein Höhenruder oder ein Querruder oder eine Auftriebsklappe ist.

12. Flugzeug (10), umfassend eine Flugzeugauftriebsfläche (1) nach einem der vorstehenden Ansprüche.

## Revendications

1. Surface portante (1) d'aéronef, comprenant une structure support (2) et une gouverne (3), la gouverne (3) comprenant :
- une structure de bord d'attaque (5), et
- au moins un élément aérodynamique (6, 6.1, 6.2) au moins partiellement agencé autour de la structure de bord d'attaque (5) et séparé de ladite structure de bord d'attaque (5) par une fente (8), la fente (8) comprenant une entrée (8.1) et une sortie (8.2),
la gouverne (3) étant configurée pour effectuer une rotation autour d'un axe d'articulation (4) formant un angle de déviation (Θ) avec la structure support (2),
la fente (8) constituant un canal ouvert entre l'élément aérodynamique (6, 6.1, 6.2) et la structure de bord d'attaque (5),
lorsque la gouverne (3) se situe à un angle de déviation (Θ) prédéterminé, l'entrée (8.1) de la fente (8) faisant face à un écoulement d'air (9) s'écoulant autour de la surface portante (1) de telle manière que cet écoulement d'air (9) soit piégé à travers l'entrée (8.1) et dirigé vers la sortie (8.2) de la fente (8),
comprenant en outre un moyen faisant étanchéité (7) configuré pour bloquer le passage de l'écoulement d'air à travers la surface portante (1), entre la structure support (2) et la gouverne (3), lorsque la gouverne (3) se situe au moins à l'angle de déviation (Θ) prédéterminé, de telle manière que le moyen faisant étanchéité (7) empêche l'écoulement d'air (9) de passer de l'autre côté de la gouverne (3) en traversant l'intérieur de la surface portante (1), **caractérisée en ce que**
le moyen faisant étanchéité (7) comprend un joint d'étanchéité en forme de lèvres (7) faisant saillie depuis l'intérieur de la structure support (2) vers la gouverne (3), de telle manière que, lorsque l'entrée (8.1) de la fente (8) ne fait pas face à l'écoulement d'air (9) s'écoulant autour de la surface portante (1), au moins une lèvre (7.1, 7.2) du joint d'étanchéité en forme de lèvres (7) soit au contact de l'au moins un élément aérodynamique (6, 6.1, 6.2) .

2. Surface portante (1) d'aéronef selon la revendication 1, dans laquelle la gouverne (3) comprend en outre :
- un extrados (3.1), et
- un intrados (3.2),
l'au moins un élément aérodynamique (6, 6.1, 6.2) étant positionné sur l'extrados (3.1) et/ou sur l'intrados (3.2) de la gouverne (3).

3. Surface portante (1) d'aéronef selon la revendication 2, dans laquelle la gouverne (3) comprend deux éléments aérodynamiques (6.1, 6.2),
- un premier élément aérodynamique (6.1) au moins partiellement agencé autour de la structure de bord d'attaque (5) et sur l'extrados (3.1) de la gouverne (3), et
- un deuxième élément aérodynamique (6.2) au moins partiellement agencé autour de la structure de bord d'attaque (5) et sur l'intrados (3.2) de la gouverne (3) .

4. Surface portante (1) d'aéronef selon la revendication 1, dans laquelle le moyen faisant étanchéité (7) se situe sur la structure support (2) de telle manière qu'à un angle de déviation (θ) quelconque de la gouverne (3), le moyen faisant étanchéité (7) soit au contact de la structure de bord d'attaque (5) de la gouverne (3).

5. Surface portante (1) d'aéronef selon l'une quelconque des revendications précédentes, dans laquelle la structure support (2) comprend une peau supérieure (11) et une peau inférieure (12), les peaux supérieure (11) et inférieure (12) renfermant toutes deux au moins partiellement au moins un élément aérodynamique (6, 6.1, 6.2) de la gouverne (3) lorsque l'entrée (8.1) de la fente (8) ne fait pas face à l'écoulement d'air (9) s'écoulant autour de la surface portante (1).

6. Surface portante (1) d'aéronef selon l'une quelconque des revendications précédentes, dans laquelle le moyen faisant étanchéité (7) est un joint d'étanchéité faisant saillie soit depuis la peau inférieure (12) soit depuis la peau supérieure (11) de la structure support (2).

7. Surface portante (1) d'aéronef selon l'une quelconque des revendications précédentes, dans laquelle la gouverne (3) est fixée rotative à la structure support (2) au niveau de l'axe d'articulation (4) au moyen d'une première ferrure (13) .

8. Surface portante (1) d'aéronef selon la revendication 7, dans laquelle la gouverne (3) est en outre fixée à l'axe d'articulation (4) au moyen d'une deuxième ferrure (14).

9. Surface portante (1) d'aéronef selon l'une quelconque des revendications précédentes, dans laquelle la gouverne (3) est une gouverne de bord de fuite.

10. Surface portante (1) d'aéronef selon l'une quelconque des revendications précédentes, constituant :
- une aile (16) d'aéronef, ou
- un stabilisateur horizontal (17), ou
- un stabilisateur vertical (18).

11. Surface portante (1) d'aéronef selon les revendications 1 à 9, dans laquelle la gouverne (3) est un gouvernail de direction, ou un gouvernail de profondeur ou un aileron d'aile ou un volet d'aile.

12. Aéronef (10) comprenant la surface portante (1) d'aéronef selon l'une quelconque des revendications précédentes.
